# FASCICULE DE BREVET EUROPEEN

(11) **EP 4 558 384 B1**
(45) Date de publication et mention de la délivrance du brevet: **03.06.2026**
(21) Numéro de dépôt: 23735793.4
(22) Date de dépôt: 30.06.2023
(51) Int. Cl.: B62J 11/10, B62K 15/00, B62K 21/22, F16B 7/10, B62K 3/00

(54) **VEHICULE DE TYPE TROTTINETTE COMPRENANT UN SYSTEME D'ACTIONNEMENT MUNI D'UN ORGANE DE GUIDAGE**
FAHRZEUG VOM TYP TRETROLLER MIT EINEM BETÄTIGUNGSSYSTEM MIT EINEM FÜHRUNGSORGAN
SCOOTER-TYPE VEHICLE COMPRISING AN ACTUATING SYSTEM WITH A GUIDE MEMBER

(30) Priorité: 20.07.2022 FR 2207434
(43) Date de publication de la demande: 28.05.2025
(73) Titulaire: Decathlon, 59650 Villeneuve d'Ascq (FR)
(72) Inventeur: LEMAITRE, Benoit, 59650 VILLENEUVE D'ASCQ (FR); FAURE, Quentin, 59650 VILLENEUVE D'ASCQ (FR); FRAY, Benoit, 59650 VILLENEUVE D'ASCQ (FR)
(74) Mandataire: Cabinet Beau de Loménie
(86) Numéro de dépôt international: PCT/EP2023/068069
(87) Numéro de publication internationale: WO 2024/017604

(56) Documents cités:
- EP-A1- 3 450 294
- CN-A- 111 043 118
- DE-U1- 202018 002 125
- FR-A1- 3 002 914
- FR-A1- 3 042 467

## Description

### Domaine Technique

La présente invention concerne le domaine technique des véhicules à roues, tels que les trottinettes ou les vélos, permettant à un utilisateur de se déplacer. La présente invention concerne plus précisément les véhicules comportant un ensemble tubulaire, par exemple une colonne de direction, ayant un premier tube et un second tube mobile en translation par rapport au premier tube. La présente invention concerne en outre les véhicules comprenant un système d'actionnement pour actionner un élément actionnable tel qu'un frein associé à une roue et ayant un bras de frein ou encore un dispositif de blocage configuré pour autoriser ou empêcher le pivotement relatif de deux portions du cadre d'un vélo ou d'une trottinette.

### Technique antérieure

On connait des véhicules comprenant un élément actionnable mais dépourvu de système d'actionnement déporté, par exemple des trottinettes munies d'un dispositif de blocage positionné au niveau d'une charnière. L'utilisateur doit dès lors actionner manuellement l'élément actionnable en agissant directement sur ce dernier, au risque de se salir les mains ou de se blesser.

On connait également des véhicules, tels que des trottinettes, comportant un élément actionnable, par exemple un frein ou un dispositif de blocage du pivotement relatif de deux portions du cadre du véhicule pour le pliage dudit véhicule, ainsi qu'un système d'actionnement pour actionner l'élément actionnable. Le système d'actionnement comprend un dispositif de commande muni d'un levier de commande et un câble reliant le levier de commande et l'élément actionnable. Ces véhicules comportent en outre un ensemble tubulaire comprenant un premier tube et un second tube, le premier tube étant fixe par rapport à l'élément actionnable. Le second tube est mobile par rapport au premier tube et par rapport à l'élément actionnable. Lesdits tubes peuvent constituer les tubes inférieur et supérieur d'une colonne de direction d'une trottinette ou encore un tube de selle et une tige de selle d'un vélo.

Un inconvénient de ces véhicules est qu'ils ne permettent pas de monter le dispositif de commande sur le second tube qui est mobile en translation par rapport au premier tube et à l'élément actionnable, ou sur tout autre élément solidaire du second tube. En effet, la position du dispositif de commande doit être fixe par rapport à l'élément actionnable afin de ne pas compromettre l'actionnement de ce dernier, notamment lors du réglage de la position relative du second tube par rapport au premier tube.

En montant le dispositif de commande sur le second tube, il risquerait en outre d'exercer une traction sur le câble lors de l'ajustement de la position relative du second tube par rapport au premier tube, entrainant un actionnement indésirable de l'élément actionnable. Ceci pourrait entrainer un freinage intempestif ou un pliage inopportun du véhicule.

Ces véhicules imposent donc le montage du dispositif de commande sur le premier tube, afin de conserver la possibilité d'ajuster la position du second tube par rapport au premier tube.

Ces véhicules ne permettent donc pas d'utiliser un dispositif de commande monté par exemple sur le guidon du vélo ou de la trottinette. L'actionnement de l'élément actionnable est donc complexe et le véhicule est peu ergonomique.

Par exemple le document DE 20 2018 002125 U1 montre un véhicule , tel que trottinette , comportant: un ensemble tubulaire s'étendant selon une direction longitudinale et comprenant un premier tube et un second tube monté mobile en translation par rapport au premier tube selon ladite direction longitudinale; au moins un élément actionnable pouvant prendre au moins une position actionnée et une position non-actionnée; et un système d'actionnement comprenant: un organe de guidage fixé au second tube, de manière à s'étendre au moins en partie à l'intérieur du second tube; un organe de tirage monté mobile en translation à l'intérieur du second tube entre une position de repos et une position de tirage, ledit organe de tirage étant disposé entre ledit organe de guidage et une première extrémité du second tube opposée au premier tube, à distance dudit organe de guidage, considéré selon ladite direction longitudinale; au moins un premier câble présentant une première partie d'extrémité fixe par rapport au premier tube et une seconde partie d'extrémité reliée audit élément actionnable et un dispositif de commande configuré pour amener l'organe de tirage en position de tirage lorsqu'il est actionné.

### Exposé de l'invention

Un but de la présente invention est de proposer un véhicule remédiant aux inconvénients précités.

Pour ce faire, l'invention porte sur un véhicule, par exemple de type trottinette, comportant :
un ensemble tubulaire s'étendant selon une direction longitudinale et comprenant un premier tube et un second tube monté mobile en translation par rapport au premier tube selon ladite direction longitudinale ;
au moins un élément actionnable pouvant prendre au moins une position actionnée et une position non-actionnée,

le véhicule comportant en outre un système d'actionnement comprenant :
   un organe de guidage fixé au second tube, de manière à s'étendre au moins en partie à l'intérieur du second tube;
   un organe de tirage monté mobile en translation à l'intérieur du second tube entre une position de repos et une position de tirage, ledit organe de tirage étant disposé entre ledit organe de guidage et une première extrémité du second tube opposée au premier tube, à distance dudit organe de guidage, considéré selon ladite direction longitudinale;
   au moins un premier câble présentant une première partie d'extrémité fixe par rapport au premier tube et une seconde partie d'extrémité reliée audit élément actionnable, le premier câble formant une boucle entourant l'organe de guidage et l'organe de tirage de sorte qu'il comprend un premier brin s'étendant entre ladite première partie d'extrémité et ledit organe de guidage, un deuxième brin s'étendant entre l'organe de guidage et l'organe de tirage et un troisième brin s'étendant entre l'organe de tirage et l'élément actionnable;
   un dispositif de commande configuré pour amener l'organe de tirage en position de tirage lorsqu'il est actionné, par quoi l'organe de tirage exerce une traction sur le troisième brin du premier câble, de façon à amener l'élément actionnable en position actionnée,
l'organe de tirage et l'organe de guidage étant configurés pour se déplacer le long dudit premier câble lorsque le second tube est déplacé en translation par rapport au premier tube.

De manière non limitative, le véhicule peut être une trottinette ou encore un vélo. Dans le cas où le véhicule est une trottinette, il comprend avantageusement une colonne de direction comprenant ledit ensemble tubulaire. Les premier et second tubes forment alors respectivement un tube inférieur et un tube supérieur de la colonne de direction. Dans le cas où le véhicule est un vélo, ledit ensemble tubulaire peut comprendre un tube de selle et une tige de selle ou encore deux tubes du cadre ou de la direction du vélo.

De préférence, mais de manière non limitative, ledit élément actionnable est un dispositif de blocage associé à une articulation entre deux portions du cadre du véhicule, comportant un organe de blocage. Cette articulation peut être arrangée entre le plateau et la colonne de direction d'une trottinette. Un tel dispositif de blocage empêche le pivotement desdites portions du cadre du véhicule l'une par rapport à l'autre lorsqu'il n'est pas actionné, et autorise leur pivotement relatif lorsqu'il est actionné.

Alternativement, et toujours de manière non limitative, l'élément actionnable peut être un frein associé à une roue du véhicule et permettant de réaliser le freinage de la roue lorsqu'il est actionné par traction exercée par le premier câble, ledit frein comprenant par exemple un bras de frein et/ou un patin de frein.

De préférence, l'élément actionnable est fixe par rapport au premier tube. L'élément actionnable est de préférence fixé au cadre du véhicule.

Le système d'actionnement est configuré pour amener l'élément actionnable en position actionnée. Le système d'actionnement du véhicule selon l'invention permet à l'utilisateur d'amener l'élément actionnable en position actionnée sans être contraint d'agir directement sur ledit élément actionnable. Le risque de se salir les mains ou de se blesser est donc réduit.

L'organe de guidage étant fixé au second tube, il est déplacé en translation par rapport au premier tube selon la direction longitudinale lors d'un déplacement en translation du second tube par rapport au premier tube selon ladite direction longitudinale.

De préférence, l'organe de guidage est fixé en une seconde extrémité du second tube, opposée à ladite première extrémité.

De préférence, l'organe de tirage est mobile en translation à l'intérieur du second tube selon ladite direction longitudinale. L'organe de tirage décrit alors un mouvement de translation relatif par rapport à l'organe de guidage, lorsqu'il est déplacé entre la position de repos et la position de tirage.

L'organe de tirage étant disposé à l'intérieur du second tube, il ne risque pas d'être endommagé et n'est pas encombrant. L'utilisateur ne risque pas non plus de se pincer avec l'organe de tirage.

De préférence, le premier câble s'étend au moins en partie à l'intérieur du premier tube, encore de préférence essentiellement à l'intérieur du premier tube. Au sein du premier tube, le premier câble s'étend sensiblement selon ladite direction longitudinale.

De manière non limitative, la première partie d'extrémité du premier câble peut être fixée directement au premier tube. Alternativement, et de manière non limitative, la première partie d'extrémité du premier câble peut être fixée indirectement au premier tube, par exemple montée à un élément de montage fixé audit premier tube.

De manière non limitative, ladite première partie d'extrémité du premier câble peut être fixée au niveau d'une portion d'extrémité ou au niveau d'une portion intermédiaire du premier tube.

De manière non limitative, l'organe de tirage peut être monté directement sur le second tube. Alternativement, il peut être monté sur un élément rapporté solidaire du second tube.

L'organe de guidage et l'organe de tirage coopèrent avec des portions du premier câble situées entre la première partie d'extrémité et la seconde partie d'extrémité dudit premier câble, afin de former ladite boucle.

De préférence, la tension des premier, deuxième et troisième brins est sensiblement la même, quelle que soit la tension appliquée au premier câble.

Lorsque le dispositif de commande est actionné, il déplace l'organe de tirage en translation par rapport au second tube, et l'amène depuis sa position de repos vers sa position de tirage. L'organe de tirage est avantageusement déplacé vers la première extrémité du second tube lorsqu'il est amené de la position de repos vers la position de tirage. L'organe de tirage est avantageusement éloigné de l'organe de guidage lorsqu'il est amené en position de tirage.

Lorsqu'il est amené vers sa position de tirage, l'organe de tirage est déplacé le long du premier câble de sorte que la taille de la boucle augmente. La longueur du premier brin reste sensiblement constante. En revanche, la longueur du deuxième brin du premier câble augmente et la longueur du troisième brin du troisième câble diminue. Conjointement, lors du déplacement de l'organe de tirage jusqu'à sa position de tirage, et dans la mesure où la première partie d'extrémité du premier câble est fixe par rapport au premier câble, l'organe de tirage exerce un effort de traction sur le troisième brin qui exerce à son tour une traction sur l'élément actionnable, ce qui conduit à la mise en position actionnée de l'élément actionnable. Ceci permet de débloquer l'articulation ou de réaliser le freinage, selon le type d'élément actionnable que comporte le véhicule.

A titre d'exemple non limitatif, en cas de déplacement de l'organe de tirage de 10 millimètres en direction de sa position tirage, la longueur du deuxième brin augmente d'environ 10 millimètres tandis que la longueur du troisième brin diminue d'environ 10 millimètres. Le troisième brin génère un déplacement d'environ 10 millimètre également au niveau de la seconde partie d'extrémité du câble qui est reliée audit élément actionnable. Il en résulte un effort de traction exercé sur l'élément actionnable.

Le troisième brin du premier câble est tiré en réponse à un déplacement de l'organe de tirage. Autrement dit, l'organe de tirage exerce un effort de traction sur le troisième brin du premier câble, conjointement à la diminution de la longueur du troisième brin et à l'augmentation de la longueur du deuxième brin.

Contrairement aux véhicules selon l'art antérieur dans lesquels l'élément actionnable (frein, élément de blocage d'une articulation) est placé en position actionnée par un effort de traction exercé par un dispositif de commande directement sur la première partie d'extrémité d'un câble, l'élément actionnable du véhicule selon l'invention est placé en position actionnée par l'intermédiaire d'un organe de tirage, déplacé par un dispositif de commande et exerçant une traction sur une portion intermédiaire du premier câble.

La traction exercée par l'organe de tirage sur le premier câble est de préférence dirigée vers la première extrémité du second tube.

L'utilisateur peut régler la position relative du second tube par rapport au premier tube en déplaçant en translation le second tube par rapport au premier tube. Un intérêt est par exemple d'ajuster la hauteur d'un guidon monté à la première extrémité du second tube.

Lorsque l'organe de tirage est maintenu en position de repos et n'est pas amené en position de tirage par le dispositif de commande, il est fixe par rapport au second tube. Aussi, le déplacement en translation du second tube entraine le déplacement en translation conjoint de l'organe de tirage.

Lors du déplacement relatif du second tube par rapport au premier tube, l'organe de tirage et l'organe de guidage coulissent ou encore glissent le long du premier câble. La tension des premier, deuxième et troisième brins reste dès lors sensiblement constante durant ce déplacement du second tube.

Lors du déplacement relatif du second tube par rapport au premier tube, l'organe de tirage et l'organe de guidage permettent de déplacer la boucle formée par le premier câble le long dudit premier câble, en maintenant sa taille sensiblement constante. En particulier, la longueur du second brin reste sensiblement constante.

Aussi, grâce à l'invention, lors du déplacement relatif du second tube par rapport au premier tube, l'organe de tirage et l'organe de guidage se déplacent le long du premier câble sans exercer de traction sur ledit premier câble et donc sans amener l'élément actionnable en position actionnée, étant considéré que le dispositif de commande n'est pas actionné dans le même temps.

Le véhicule selon l'invention permet ainsi, où que soit positionné le dispositif de commande sur le véhicule, d'ajuster la position relative du second tube par rapport au premier tube sans compromettre l'actionnement de l'élément actionnable. Le véhicule permet donc le montage du dispositif de commande sur le second tube. Le véhicule selon l'invention permet en outre de régler la position relative du second tube par rapport au premier tube sans générer d'actionnement indésirable de l'élément actionnable, quand bien même le dispositif de commande serait monté sur le second tube. En outre, l'élément actionnable peut être placé en position actionnée, quelle que soit la position relative du second tube par rapport au premier tube. Autrement dit, l'actionnement de l'élément actionnable et le réglage de la position relative du second tube par rapport au premier tube sont décorrelés et n'interfèrent pas l'un sur l'autre.

Grâce à l'invention, le dispositif de commande peut être déporté et monté sur le second tube ou sur toute autre portion du véhicule solidaire du second tube, par exemple sur le guidon du véhicule. Le véhicule permet alors l'actionnement de l'élément actionnable, quelle que soit la position relative du second tube par rapport au premier tube. Un intérêt est de faciliter la mise en position actionnée de l'élément actionnable en permettant de rendre le dispositif de commande plus accessible pour l'utilisateur, sans qu'il ne soit nécessaire d'intervenir directement sur l'élément actionnable. Les risques de blessure ou de salissure sont réduits pour l'utilisateur.

De préférence, ledit organe de tirage et ledit organe de guidage sont maintenus à une distance constante l'un de l'autre, considérée selon ladite direction longitudinale, lors dudit déplacement en translation relatif du second tube par rapport au premier tube. La longueur du deuxième brin du premier câble reste donc constante. Un intérêt est de ne pas modifier la tension du premier câble, et de ne pas exercer de traction sur le troisième brin du premier câble, lors dudit déplacement relatif, réduisant les risques de mise en position actionnée intempestive de l'élément actionnable.

Avantageusement, ledit organe de tirage est déplacé vers la première extrémité du second tube lorsqu'il est amené en position de tirage, de sorte que la distance entre l'organe de tirage et l'organe de guidage augmente. L'organe de tirage est éloigné de l'organe de guidage lorsqu'il est amené en position actionnée, de sorte que la taille de la boucle formée par le premier câble augmente. L'organe de tirage est avantageusement éloigné de l'organe de guidage.

De manière avantageuse, l'organe de tirage comprend une surface de contact sur laquelle prend appui le premier câble, ladite surface de contact étant configurée pour se déplacer le long du premier câble lors du déplacement relatif du second tube par rapport au premier tube. Un intérêt est d'améliorer le guidage du déplacement de l'organe de tirage le long du premier câble. Ladite surface de contact est de préférence courbe, encore de préférence cylindrique ou hémicylindrique.

Préférentiellement, l'organe de tirage comprend une poulie configurée pour coopérer avec ledit premier câble, ladite poulie pivotant à l'intérieur du second tube autour d'un axe de poulie transversal à ladite direction longitudinale. Lors du déplacement de l'organe de tirage le long du premier câble, ladite poulie pivote autour de son axe de poulie, ce qui réduit les frottements entre ledit organe de tirage et le premier câble. L'effort nécessaire pour déplacer le second tube par rapport au premier tube est donc réduit.

De préférence, l'organe de guidage comprend une surface de guidage sur laquelle prend appui le premier câble, ladite surface de guidage étant configurée pour se déplacer le long du premier câble lors du déplacement relatif du second tube par rapport au premier tube. En d'autres mots, le premier câble glisse sur ladite surface de guidage lors du déplacement de l'organe de guidage le long du premier câble. Un intérêt est d'améliorer le guidage du déplacement de l'organe de guidage le long du premier câble.

De préférence, ladite surface de guidage est courbe, encore de préférence convexe, la convexité étant de préférence orientée vers le premier tube ou encore vers la seconde extrémité du second tube.

Avantageusement, ledit organe de guidage comprend une partie de guidage de forme hémicylindrique. En d'autres mots, ladite partie de guidage présente avantageusement la forme d'un demi-cylindre. Ladite surface de guidage est formée au moins en partie sur ladite partie de guidage. La surface de guidage formée sur la partie de guidage est courbe et le premier câble en appui sur ladite surface de guidage en suit la courbure.

Un intérêt est d'améliorer le guidage du déplacement de l'organe de guidage le long du premier câble tout en réduisant l'usure du premier câble glissant sur l'organe de guidage et plus précisément sur ladite surface de guidage.

De manière avantageuse, le système d'actionnement comprend un dispositif de rappel configuré pour amener l'organe de tirage de la position de tirage vers la position de repos, lorsque le dispositif de commande n'est pas actionné. Un intérêt est d'éviter que l'organe de tirage ne reste en position de tirage et donc que l'élément actionnable ne reste en position actionnée, risquant d'entrainer par exemple un freinage ou un pliage indésirable.

Ledit dispositif de rappel peut comprendre un ressort disposé entre l'organe de tirage et une portion d'appui disposée dans le second tube.

Préférentiellement, le premier tube comprend une première extrémité et une seconde extrémité, la seconde extrémité étant opposée au second tube, la première partie d'extrémité du premier câble est fixée en une zone de fixation disposée au niveau de ladite première extrémité du premier tube. De préférence, le premier tube comprend ladite zone de fixation. Alternativement, et de manière non limitative, le véhicule peut comprend un élément de montage monté sur ledit premier tube et comprenant cette zone de fixation.

La zone de fixation est avantageusement disposée au niveau d'une extrémité supérieure du premier tube.

On comprend que, considérée selon ladite direction longitudinale, ladite zone de fixation s'étend entre l'organe de guidage et la première extrémité du second tube.

De préférence, le second tube est monté mobile en translation à l'intérieur du premier tube.

Avantageusement, le véhicule comprend un élément de serrage fixé au premier tube et configuré pour prendre une position de serrage dans laquelle il serre ledit premier tube sur ledit second tube afin d'empêcher le déplacement en translation du second tube par rapport au premier tube et une position de libération dans laquelle il autorise le déplacement en translation du second tube à l'intérieur du premier tube.

L'élément de serrage comprend avantageusement une partie annulaire à l'intérieur de laquelle s'étendent le second tube et le premier tube. L'élément de serrage comprend de préférence un organe de serrage configuré pour serrer ladite partie annulaire sur le premier tube.

L'élément de serrage est de préférence fixé en une première extrémité du premier tube, formant de préférence une extrémité supérieure du premier tube.

Préférentiellement, la première partie d'extrémité du premier câble est montée audit élément de serrage. Ladite première partie d'extrémité est alors fixée indirectement au premier tube par l'intermédiaire de l'élément de serrage.

Alternativement, et de manière non limitative, ladite première partie d'extrémité du premier câble pourrait être montée directement sur le premier tube.

De manière avantageuse, le dispositif de commande comprend un organe de commande et un second câble ayant une première partie extrémité reliée à l'organe de commande et une seconde partie d'extrémité reliée à l'organe de tirage. L'organe de commande exerce un effort de traction sur le second câble lorsqu'il est actionné, par quoi l'organe de tirage est amené de la position de repos vers la position de tirage. L'organe de commande peut donc être déporté, facilitant la commande de l'actionnement et améliorant l'ergonomie du véhicule.

De préférence, le second câble s'étend intégralement à l'intérieur du second tube.

De préférence, mais de manière non limitative, l'organe de commande est monté sur le second tube ou sur une portion du véhicule solidaire du second tube.

De manière non limitative, l'organe de commande peut comprendre un levier ou encore une poignée pivotante.

De préférence, le véhicule comprend un plateau et une colonne de direction comprenant ledit ensemble tubulaire, la colonne de direction étant montée pivotante par rapport au plateau, selon un axe de pliage transversal à ladite direction longitudinale, entre au moins une position pliée et une position dépliée, l'élément actionnable étant configuré pour empêcher le pivotement de la colonne de direction par rapport au plateau lorsqu'il est en position non-actionnée et pour autoriser le pivotement de la colonne de direction par rapport audit plateau autour dudit axe de pliage lorsqu'il est en position actionnée.

L'élément actionnable est alors formé par un dispositif de blocage du pivotement de la colonne de direction par rapport au plateau.

Le véhicule est de préférence une trottinette.

### Brève description des dessins

L'invention sera mieux comprise à la lecture de la description qui suit d'un mode de réalisation de l'invention donné à titre d'exemple non limitatif, en référence aux dessins annexés, sur lesquels :
[Fig. 1]la figure **1** illustre un véhicule muni d'un système d'actionnement selon l'invention;
[Fig. 2]la figure **2** est une vue de côté du véhicule de la figure 1;
[Fig. 3]la figure **3** est une vue en perspective du système d'actionnement du véhicule de la figure 1, l'organe de tirage étant en position de repos ;
[Fig. 4]la figure **4** est une vue de face du système d'actionnement du véhicule de la figure 1, l'organe de tirage étant en position de repos ;
[Fig. 5]la figure **5** est une vue en coupe du système d'actionnement du véhicule de la figure 1, l'organe de tirage étant en position de repos ;
[Fig. 6]la figure **6** est une vue de côté du dispositif de commande du véhicule de la figure 1, en position non-actionnée;
[Fig. 7]la figure **7** est une vue de côté de l'élément actionnable du véhicule de la figure 1, en position non-actionnée ;
[Fig. 8]la figure **8** est une vue de côté du dispositif de commande du véhicule de la figure 1, en position actionnée;
[Fig. 9]la figure **9** une vue en perspective du système d'actionnement du véhicule de la figure 1, l'organe de tirage étant en position de tirage ;
[Fig. 10]la figure **10** est une vue en coupe du système d'actionnement, l'organe de tirage étant en position de tirage ;
[Fig. 11]la figure **11** est une vue de côté de l'élément actionnable du véhicule de la figure 1, en position actionnée;
[Fig. 12]la figure **12** est une vue de côté du véhicule de la figure 1, le second tube ayant été déplacé et enfoncé dans le premier tube; et
[Fig. 13]la figure **13** illustre le système d'actionnement du véhicule de la figure 1, le second tube ayant été déplacé et enfoncé dans le premier tube.

### Description des modes de réalisation

L'invention porte sur un véhicule, par exemple une trottinette ou un vélo, comprenant un système d'actionnement permettant d'actionner un élément actionnable.

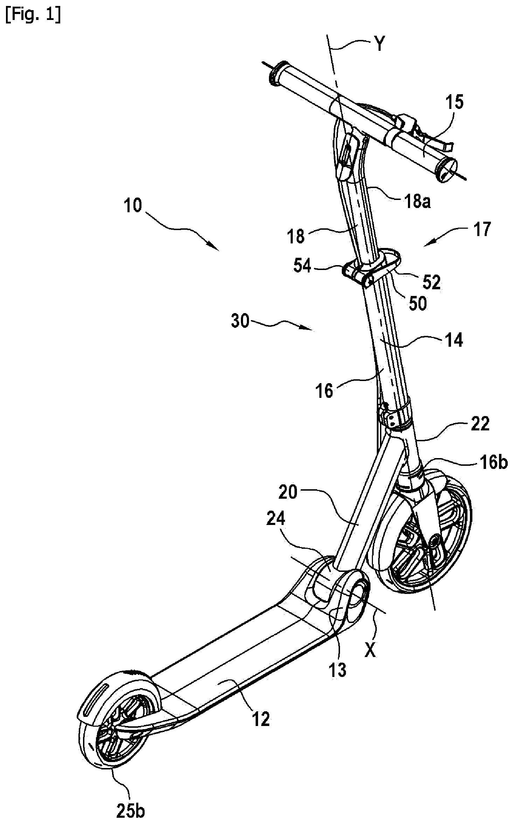

Un mode de réalisation non limitatif d'un véhicule selon l'invention sera décrit en référence aux figures **1** à **13****.** Dans ce mode de réalisation non limitatif, le véhicule est une trottinette.

La figure **1** illustre un véhicule **10** selon l'invention, en l'espèce une trottinette **10,** comprenant un système d'actionnement **30.** La trottinette comprend un plateau **12** sur lequel l'utilisateur peut poser ses pieds. La trottinette comprend en outre une colonne de direction **14** s'étendant selon une direction longitudinale **Y.** La colonne de direction **14** comprend un ensemble tubulaire **17** s'étendant selon ladite direction longitudinale **Y.** L'ensemble tubulaire **17** comprend un premier tube **16,** formant un tube inférieur et un second tube **18,** formant un tube supérieur. Le second tube **18** est monté mobile en translation à l'intérieur du premier tube **16,** selon ladite direction longitudinale **Y.**

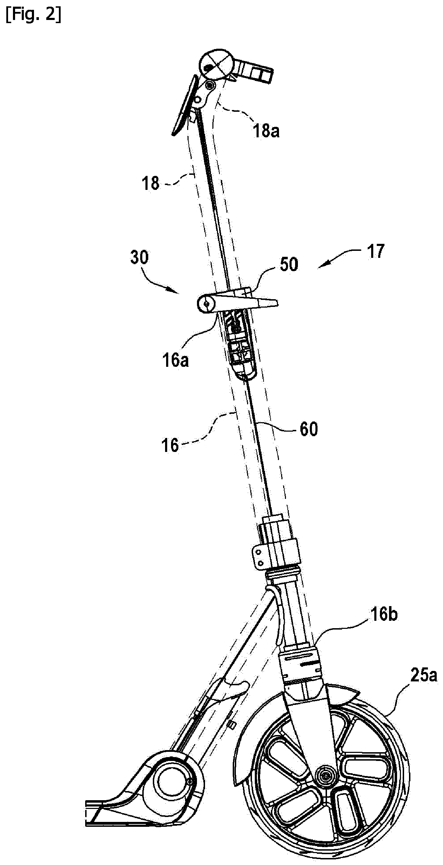

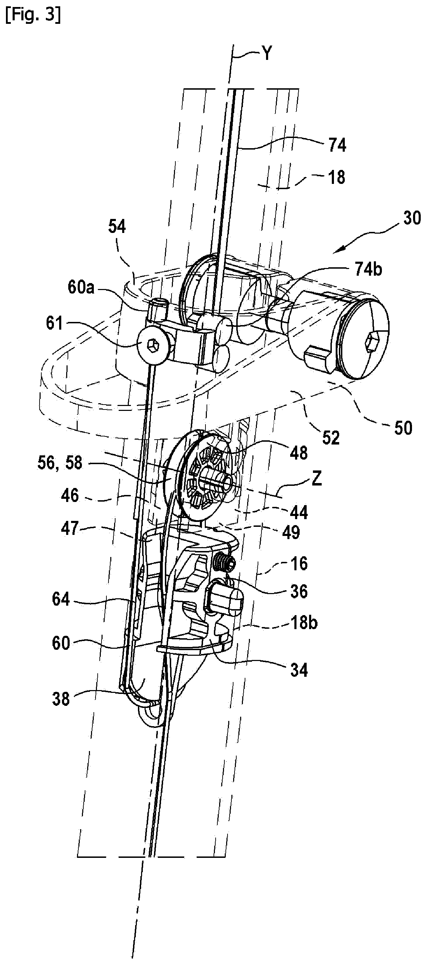

Le second tube présente une première extrémité **18a,** opposée au premier tube, munie d'un guidon **15.** Cette première extrémité **18a** forme une extrémité supérieure du second tube. Le second tube **18** présente en outre une seconde extrémité **18b** opposée à la première extrémité **18a** et s'étendant à l'intérieur du premier tube **16,** tel qu'illustrée en figure **3****.** En se référant à la figure **2****,** on constate que le premier tube **16** présente une première extrémité **16a,** formant une extrémité supérieure pour le premier tube. Le premier tube **16** présente en outre une seconde extrémité **16b** opposée à la première extrémité **16a** et opposée au second tube **18.** La seconde extrémité **16b** forme une extrémité inférieure du premier tube **16** et est munie d'une roue avant **25a.** Le véhicule comprend en outre une roue arrière **25b.**

En se référant à la figure **3****,** on constate que la colonne de direction **14** est munie d'un élément de serrage **50** comprenant une portion de serrage **54** et un levier **52.** L'élément de serrage **50** est monté sur le premier tube **16,** au niveau de sa première extrémité **16a,** de sorte que la portion de serrage enserre ledit premier tube. L'élément de serrage **50** est configuré pour prendre une position de serrage dans laquelle la portion de serrage **54** serre le premier tube **16** sur ledit second tube **18** de manière à empêcher le déplacement en translation du second tube **18** par rapport au premier tube **16.** Un intérêt est de maintenir le réglage en hauteur du second tube et donc du guidon **15.** L'élément de serrage **50** est en outre configuré pour prendre une position de libération dans laquelle la portion de serrage **54** ne serre pas le premier tube, de sorte qu'il autorise le déplacement en translation du second tube **18** par rapport au premier tube **16.** Un intérêt est de permettre le réglage en hauteur du second tube et donc du guidon **15.** Le levier **52** permet de faire passer l'élément de serrage **50** de la position de serrage à la portion de libération et inversement.

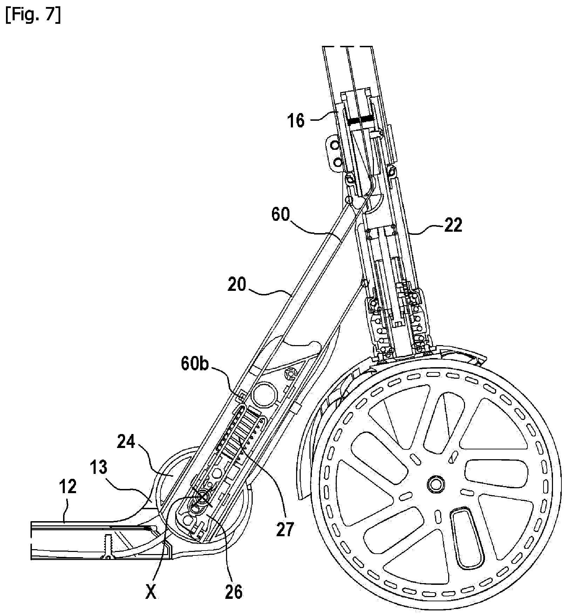

Tel qu'illustré en figure **7****,** la colonne de direction **14** comprend par ailleurs une pièce de connexion **20** comprenant un manchon **22.** Le premier tube **16** est monté pivotant à l'intérieur du manchon **22.** La pièce de connexion **20** comprend par ailleurs une première partie d'articulation **24** configurée pour coopérer avec une seconde partie d'articulation **13** du plateau **12.** Les première et seconde parties d'articulation **24,13** forment une articulation **24,13** permettant à la pièce de connexion **20,** et plus généralement à la colonne de direction **14,** de pivoter par rapport au plateau **12** autour d'un axe de pliage **X.** Cet axe de pliage **X** est transversal à la direction longitudinale **Y** de la colonne de direction et s'étend sensiblement horizontalement.

Tel qu'illustré en figure **7****,** et selon l'invention, ladite trottinette **10** est munie d'un élément actionnable **26** formant dans cet exemple non limitatif un dispositif de blocage de l'articulation **24,13.** L'élément actionnable **26** peut être actionné par un effort de traction exercé sur ledit élément actionnable. Sans sortir du cadre de l'invention, l'élément actionnable **26** pourrait également être un frein associé à une roue du véhicule et ayant un bras de frein, et permettant de réaliser le freinage de la roue lorsqu'il est actionné par traction exercée par un câble.

L'élément actionnable **26** est disposé au niveau de l'articulation **24,13** et s'étend en partie à l'intérieur de la pièce de connexion **20.** L'élément actionnable **26** est mobile en translation, selon la direction de la pièce d'actionnement, entre une position non-actionnée, ou position de verrouillage, dans laquelle il bloque l'articulation et empêche le pivotement de la colonne de direction **14** par rapport au plateau **12,** et une position actionnée, ou position déverrouillée, dans laquelle il libère l'articulation **24,13** et il autorise le pivotement de la colonne de direction **14** par rapport audit plateau **12** autour dudit axe de pliage **X.** Dans la position actionnée, l'élément actionnable **26** autorise le pliage ou dépliage de la colonne de direction **14** de la trottinette.

Un ressort **27** coopère avec l'élément actionnable **26.** Ledit ressort **27** est configuré pour exercer un effort de rappel sur l'élément actionnable **26,** tendant à le maintenir ou le ramener en position non-actionnée.

Selon l'invention, le véhicule **10** comprend en outre un système d'actionnement **30,** tel qu'illustré en figure **2****,** sur laquelle les premier et second tubes sont montrés transparents au moyen de pointillés. Le système d'actionnement **30** est configuré pour actionner l'élément actionnable **26** de manière à l'amener en position actionnée.

Le système d'actionnement **30** comprend un organe de guidage **34** fixé à l'intérieur du second tube **18.** Tel qu'on le constate en figure **3****,** l'organe de guidage **34** comprend une partie principale **36,** de forme générale cylindrique, configurée pour être fixée à l'intérieur du second tube **18** et s'étendant selon la direction longitudinale **Y.** Plus précisément, ladite partie principale **36** s'étend à l'intérieur du second tube **18** au niveau de la seconde extrémité **18b** du second tube. L'organe de guidage **34** comprend en outre une partie de guidage **38** convexe, ayant la forme d'un demi-cylindre, ou encore de forme hémicylindrique, s'étendant radialement depuis ladite partie principale **36,** vers la seconde extrémité **16b** du premier tube **16.** Ladite partie de guidage **38** fait saillie radialement depuis la seconde extrémité **18b** du second tube **18** et s'étend hors dudit second tube **18.**

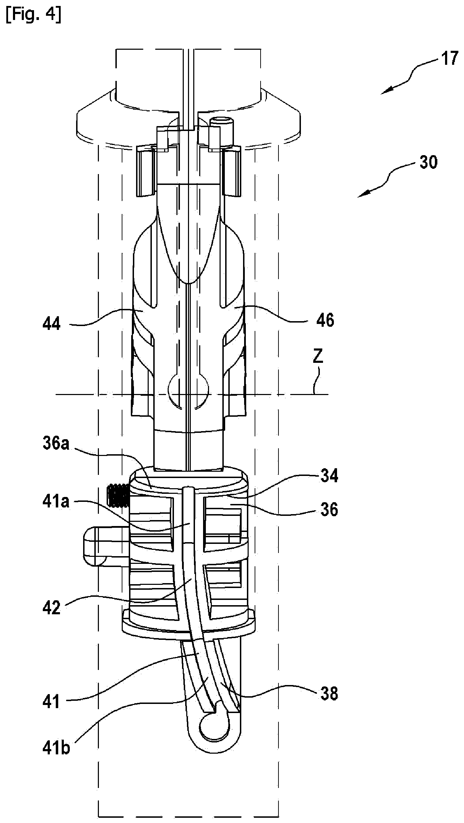

Sur la figure **4** montrant l'organe de guidage en vue de côté, on constate que ledit organe de guidage **34** présente une gorge **41.** Ladite gorge **41** présente une première portion de gorge **41a** ménagée dans une paroi latérale de la partie principale **36** de l'organe de guidage et s'étendant sensiblement parallèlement à ladite direction longitudinale **Y.** Ladite gorge **41** présente entre outre une seconde portion de gorge **41b** ménagée dans la tranche de la partie de guidage **38** de l'organe de guidage, et décrivant une trajectoire semi-circulaire. Ladite gorge **41** définit une surface de guidage **42.**

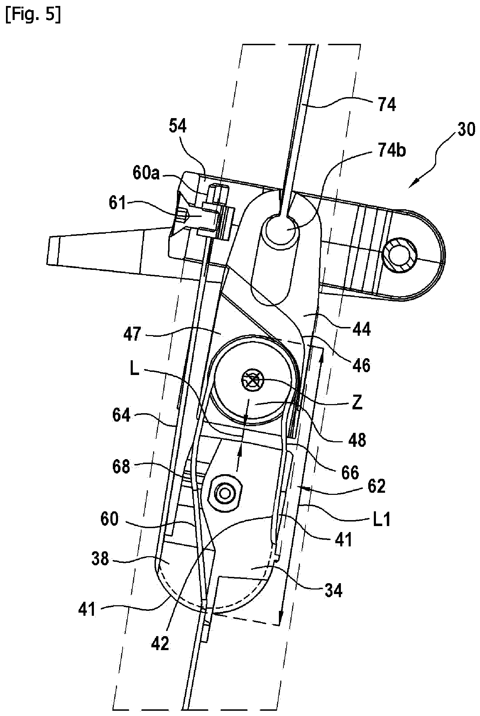

Le système d'actionnement **30** comprend de plus un organe de tirage **44** particulièrement visible en figures **3** et **5****,** monté mobile en translation à l'intérieur du second tube **18** selon ladite direction longitudinale **Y.** L'organe de tirage **44** est distinct de l'organe de guidage **34** et s'étend entre l'organe de guidage et la première extrémité **18a** du second tube **18.** L'organe de tirage **44** comprend une pièce de montage **46** montée mobile en translation, ou encore coulissante, à l'intérieur du second tube **18** selon la direction longitudinale **Y.** L'organe de tirage **44** comprend en outre une poulie **48** visible en figure **3** ou sur la vue en coupe de la figure **5****.** La poulie **48** est montée pivotante par rapport à ladite pièce de montage **46** autour d'un axe de poulie **Z** transversal à ladite direction longitudinale **Y.** Plus précisément ladite pièce de montage **46** comprend une première paroi **47** et une seconde paroi **49** parallèles entre elles. Ladite poulie **48** est montée pivotante entre lesdites première et seconde parois **47,49.** On comprend que la poulie **48** est également mobile en translation, à l'intérieur du second tube **18,** selon ladite direction longitudinale **Y,** compte-tenu de son montage sur ladite pièce de montage **46.** La poulie **48** présente une rainure **56** définissant une surface de contact **58.**

L'organe de tirage **44** est disposé à l'intérieur du second tube **18** entre la première extrémité **18a** et la seconde extrémité **18b** du second tube, ou encore entre l'organe de guidage **36** et la première extrémité **18a** du second tube. Il est en outre disposé à distance de l'organe de guidage, considéré selon ladite direction longitudinale **Y.**

Le système d'actionnement **30** comprend par ailleurs un premier câble **60** dont le cheminement complet est montré en figure **2****.** Le premier câble présente une première partie d'extrémité **60a** et une seconde partie d'extrémité **60b.** Dans cet exemple non-limitatif, la première partie d'extrémité **60a** du premier câble est munie d'une tête de câble. Tel qu'illustré en figure **5****,** la première partie d'extrémité **60a** du premier câble **60** est fixée à la portion de serrage **54** de l'élément de serrage **50** en une zone de fixation **61,** au niveau de la première extrémité **16a** du premier tube **16.** La première partie d'extrémité **60a** du premier câble **60** est donc fixe par rapport au premier tube **16,** bien qu'elle ne soit pas fixée directement audit premier tube.

La zone de fixation est située au-dessus de l'organe de guidage **34** et de l'organe de tirage **44.** Elle est en outre située entre l'organe de tirage et la première extrémité **18a** du second tube.

Tel qu'illustré en figure **7****,** la seconde partie d'extrémité **60b** du premier câble **60** est reliée à l'élément actionnable **26.**

En se référant de nouveau à la vue en coupe de la figure **5****,** on constate que le premier câble **60** forme par ailleurs une boucle **62** entourant l'organe de guidage **34** et l'organe de tirage **44.** Plus précisément, Le premier câble **60** s'étend en partie à l'intérieur de la gorge **41** de l'organe de guidage **34** et coopère avec la surface de guidage **42,** sur laquelle il prend appui. Le câble s'étend également en partie à l'intérieur de la rainure **56** de la poulie **48** et coopère avec la surface de contact **58,** sur laquelle il prend appui.

Le premier câble **60** comprend un premier brin **64** s'étendant entre ladite première partie d'extrémité **60a** du premier câble et ledit organe de guidage **34,** ou encore entre la zone de fixation **61** et ledit organe de guidage **34.** Le premier brin **64** s'étend sensiblement parallèlement à la direction longitudinale **Y** et longe la partie principale **36** de l'organe de guidage. Le premier câble **60** entre dans la gorge **41** au niveau de la partie de guidage **38** et en ressort au niveau d'une surface supérieure **36a** de la partie principale de l'organe de guidage **34,** illustrée en figure **4****.** Sur la figure **4****,** le premier câble **60** n'est pas représenté pour plus de clarté.

Le premier câble **60** comprend en outre un deuxième brin **66** s'étendant entre l'organe guidage **34** et la poulie **48** de l'organe de tirage **44.** Ce deuxième brin **66** s'étend sensiblement parallèlement à la direction longitudinale **Y** et parallèlement au premier brin **64.** Le premier câble comprend de plus un troisième brin **68** s'étendant entre l'organe de tirage **44** et l'élément actionnable **26.**

La tension des premier, deuxième et troisième brins **64,66,68** est sensiblement la même, quelle que soit la tension appliquée au premier câble **60.**

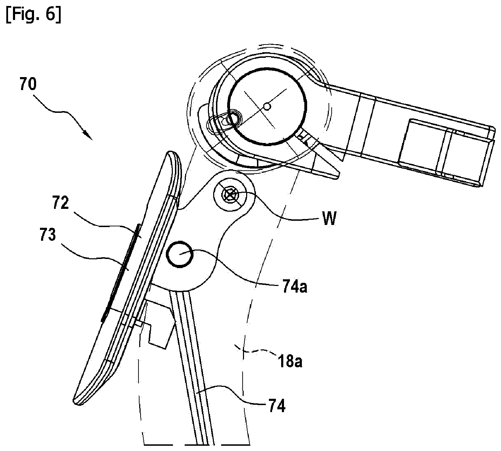

Le système d'actionnement **30** comprend de plus un dispositif de commande **70** illustré en figure **6****.** Le dispositif de commande **70** comprend un organe de commande **72** comprenant un levier **73.** L'organe de commande **72** est monté pivotant par rapport à la première extrémité **18a** du second tube **18** autour d'un axe de commande **W** transversal à la direction longitudinale **Y.** De manière non limitative, et sans sortir du cadre de l'invention, le dispositif de commande et plus précisément l'organe de commande pourrait également être monté sur le second tube **18** ou encore sur le premier tube **16.**

Le dispositif de commande comprend en outre un second câble **74** ayant une première partie extrémité **74a** reliée à l'organe de commande **72** et une seconde partie d'extrémité **74b** reliée à l'organe de tirage **44.** Plus précisément, la première partie d'extrémité **74a** du second câble **74** présente une tête de câble fixée à l'organe de commande **72.** En outre, tel qu'illustré en figure **5****,** la seconde partie d'extrémité **74b** du second câble **74** présente une tête de câble fixée à l'organe de tirage **44.**

Le second câble s'étend intégralement à l'intérieur du second tube **18** et s'étend sensiblement selon la direction longitudinale **Y.**

Sans actionnement du dispositif de commande, et tel qu'illustré en figure **3** à **7****,** l'organe de tirage **44** est en position de repos et l'élément actionnable **26** n'est pas actionné. La distance **L** entre l'organe de tirage **44** et l'organe de guidage **34** est minimale. De même la longueur **L1** du second brin **66** du premier câble **60** est minimale.

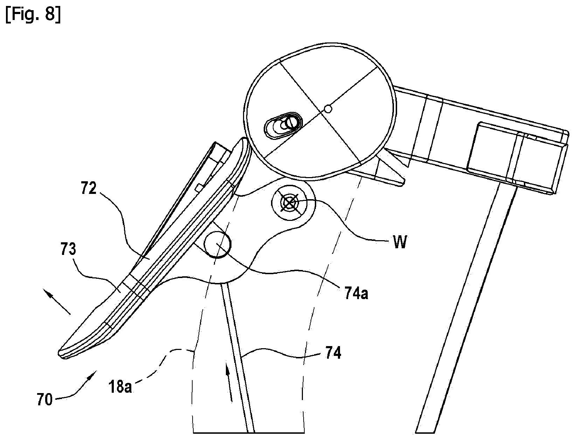

L'actionnement de l'élément actionnable va maintenant être décrit en référence aux figures **8** à **11****.**

Pour actionner l'élément actionnable **26** afin de débloquer l'articulation **24,13** et permettre de plier la colonne de direction **14** par rapport au plateau **12,** ou autrement dit pour plier la trottinette **10,** l'utilisateur actionne l'organe de commande **72** du dispositif de commande **70.** Pour ce faire, il fait pivoter le levier **73** et donc l'organe de commande **72** autour de l'axe de commande **W,** tel qu'illustré en figure **8****.** Il est aisé pour l'utilisateur d'agir sur le dispositif de commande qui est monté sur le guidon et donc facilement accessible.

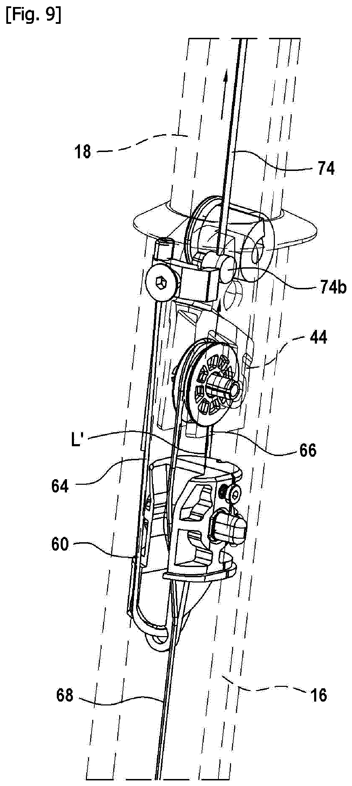

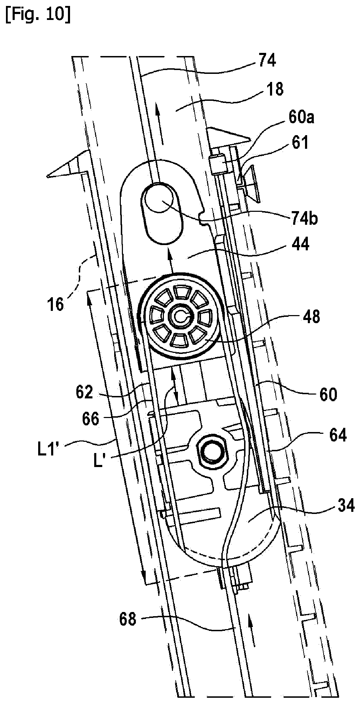

L'organe de commande **72** tire alors sur le second câble **74.** Le second câble **74** exerce en conséquence un effort de traction sur l'organe de tirage **44** dirigé vers la première extrémité **18a** du second tube **18,** selon la direction longitudinale **Y.** Comme on le constate en figures **9** et **10****,** ledit organe de tirage **44** est déplacé en translation à l'intérieur du second tube **18,** vers la première extrémité **18a** du second tube, selon ladite direction longitudinale **Y.** L'organe de tirage est amené dans une position de tirage illustrée en figures **9** et **10****.** Dans le même temps, l'organe de guidage **34** est maintenu immobile, fixé à la seconde extrémité **18b** du second tube **18.** L'organe de tirage **44** est donc éloigné de l'organe de guidage **34** jusqu'à ce qu'ils soient séparés d'une distance **L'** supérieure à la distance **L.** L'organe de tirage **44** est déplacé le long du premier câble **60.**

La longueur du premier brin **64** du premier câble **60** reste constante, tandis que la longueur du deuxième brin **66** augmente et la longueur du troisième **68** brin diminue. La taille de la boucle **62** entourant l'organe de guidage **34** et l'organe de tirage **44** augmente. Lorsqu'il est amené en position de tirage, l'organe de tirage **44** exerce une traction sur le troisième brin **68** du premier câble **60.** Autrement dit, l'organe de tirage **44** exerce une traction sur une portion du premier câble située entre la première partie d'extrémité **60a** et la seconde partie d'extrémité **60b.**

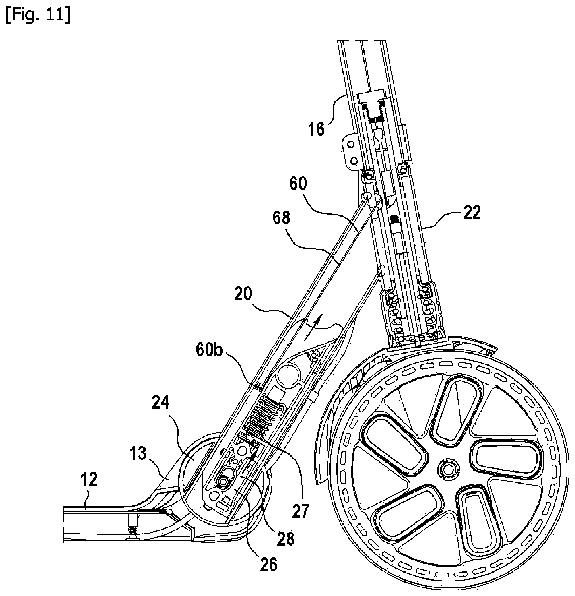

Tel qu'on le constate sur la figure **11****,** le troisième brin **68** du premier câble **60** tire sur l'élément actionnable **26** de sorte que l'élément actionnable **26** est déplacé en translation à l'intérieur de la pièce de connexion **20,** en direction du manchon **22.** L'élément actionnable **26** est alors amené en position actionnée, et libère l'articulation **13,24,** autorisant le pivotement de la colonne de direction **14** par rapport au plateau **12.** La colonne de direction peut dès lors être placée en position pliée.

Lorsque l'utilisateur lâche le levier **73** et n'actionne plus l'organe de commande **72,** le second câble **74** ne tire plus sur l'organe de tirage **44,** qui n'exerce plus de traction sur le premier câble **60.** Le premier câble **60** ne tire plus sur l'élément actionnable **26.** Le ressort **27** exerce un effort de rappel sur l'élément actionnable **26** qui est ramené en position non-actionnée, ou position de verrouillage, dans laquelle il empêche le pivotement de la colonne de direction **14.** L'élément actionnable tire sur le premier câble **60** qui exerce un effort de traction sur l'organe de tirage **44** dirigé vers la seconde extrémité **16b** du premier tube. L'organe de tirage est déplacé en translation vers l'organe de guidage **34** et est ramené en position de repos.

Le ressort **27** forme donc un dispositif de rappel **27** configuré pour amener l'organe de tirage **44** de la position de tirage vers la position de repos, lorsque le dispositif de commande **70** n'est pas actionné.

Nous allons maintenant décrire les opérations de réglage de la position relative du second tube **18** par rapport au premier tube **16.** Dans cet exemple non limitatif, l'ajustement de la position du second tube **18** permet de régler la hauteur du guidon **15** de la trottinette **10.**

Selon l'invention, l'organe de tirage **44** et l'organe de guidage **34** sont configurés pour se déplacer le long dudit premier câble **60** lorsque le second tube est déplacé en translation par rapport au premier tube.

Pour régler la position relative du second tube par rapport au premier tube, l'utilisateur actionne le levier **52** de manière à faire passer l'élément de serrage **50** de la position de serrage à la portion de libération. Dès lors, l'élément de serrage **50** ne serre plus le premier tube **16** sur le second tube **18.** L'utilisateur peut dès lors déplacer le second tube **18** en translation par rapport au premier tube **16** selon la direction longitudinale **Y.**

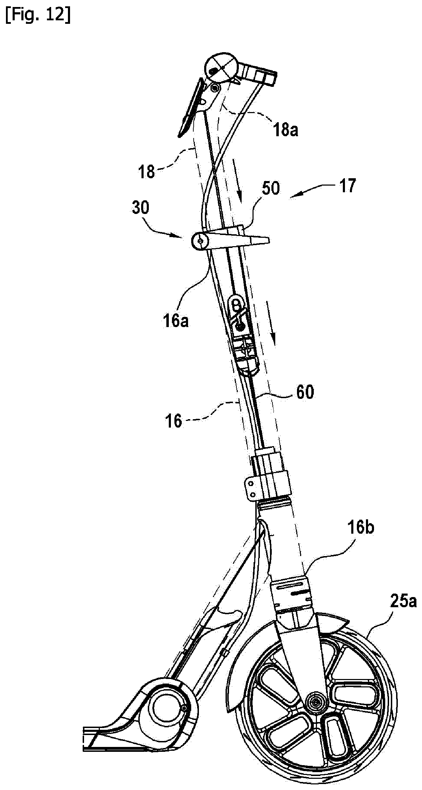

Dans cet exemple non limitatif, tel qu'illustré en figure **12****,** le second tube **18** est déplacé vers la seconde extrémité **16b** du premier tube et est donc enfoncé davantage dans le premier tube **16.** Ce réglage permet de baisser la hauteur du guidon **15** de la trottinette.

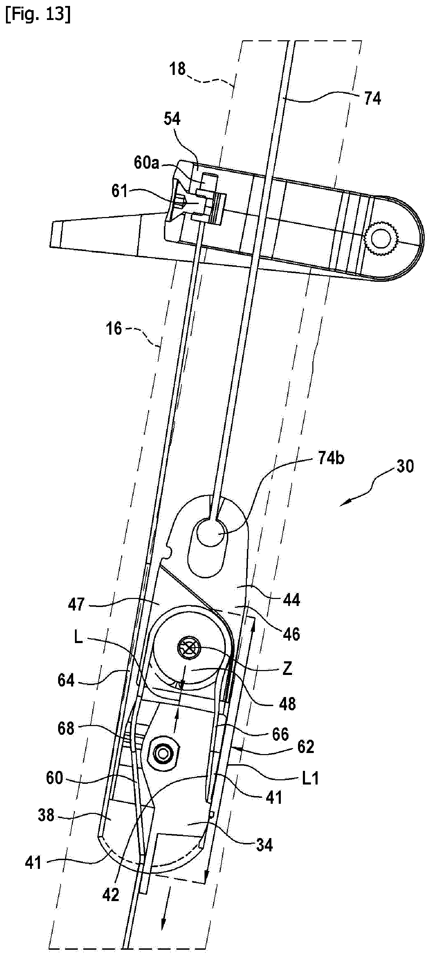

Lors du déplacement en translation relatif du second tube par rapport au premier tube, l'organe de guidage **34** et l'organe de tirage **44,** montés au second tube, décrivent un même mouvement de translation. Comme on le constate en figure **13****,** la distance **L,** correspondant à la distance entre l'organe de guidage et l'organe de tirage lorsque ce dernier est en position de repos, reste constante. Lors de ce déplacement en translation relatif du second tube par rapport au premier tube, l'organe de tirage **44** et l'organe de guidage **34** se déplacent le long premier câble **60** ou encore coulissent le long du premier câble. Le premier câble glisse sur la surface de guidage **42,** à l'intérieur de la gorge **41** de l'organe de guidage **34.** En outre, la poulie **48** pivote selon son axe de poulie **Z** et se déplace le long dudit premier câble **60.**

En conséquence, la tension des premier, deuxième et troisième brins **64,66,68** du premier câble reste sensiblement constante. En outre, la longueur **L1** du deuxième brin **66** reste inchangée. La longueur du premier brin **64** augmente tandis que la longueur du troisième brin **68** diminue, de sorte que la taille de la boucle **62** reste constante.

Lors du déplacement relatif du second tube **18** par rapport au premier tube **16,** la tension du premier câble n'est pas modifiée et aucun effort de traction n'est exercé sur le troisième brin **68,** de sorte que le réglage de la position relative du second tube ne génère pas de traction sur l'élément actionnable **26.** Le dispositif de tirage **44** reste en outre en position de repos, étant considéré que le dispositif de commande **70** n'est pas actionné.

Dès lors, l'élément actionnable **26** peut être actionné au moyen du système d'actionnement **30,** comme cela a été détaillé en référence aux figures **8** à **11****.**

L'invention permet d'ajuster la position relative du second tube **18** par rapport au premier tube **16** sans compromettre ni interférer sur l'actionnement de l'élément actionnable **26.** Le système d'actionnement **30** garantit un actionnement efficace de l'élément actionnable **26** quelle que soit la position relative du second tube par rapport au premier tube. Le réglage de la position relative du second tube **18** par rapport au premier tube ne génère pas non plus d'actionnement indésirable de l'élément actionnable **26,** garantissant la sécurité de l'utilisateur. L'invention permet donc le montage du dispositif de commande **70** sur le second tube **18,** ou sur le guidon **15** solidaire du second tube, sans compromettre l'actionnement de l'élément actionnable **26** ni la sécurité de l'utilisateur. De même, l'actionnement de l'élément actionnable ne compromet pas le réglage de la position du second tube par rapport au premier tube.

## Revendications

1. Véhicule (10), par exemple de type trottinette, comportant :
un ensemble tubulaire (17) s'étendant selon une direction longitudinale (Y) et comprenant un premier tube (16) et un second tube (18) monté mobile en translation par rapport au premier tube selon ladite direction longitudinale ;
au moins un élément actionnable (26) pouvant prendre au moins une position actionnée et une position non-actionnée,
le véhicule comportant en outre un système d'actionnement (30) comprenant :
un organe de guidage (34) fixé au second tube, de manière à s'étendre au moins en partie à l'intérieur du second tube;
un organe de tirage (44) monté mobile en translation à l'intérieur du second tube entre une position de repos et une position de tirage, ledit organe de tirage étant disposé entre ledit organe de guidage et une première extrémité du second tube opposée au premier tube, à distance dudit organe de guidage, considéré selon ladite direction longitudinale;
au moins un premier câble (60) présentant une première partie d'extrémité (60a) fixe par rapport au premier tube et une seconde partie d'extrémité (60b) reliée audit élément actionnable, le premier câble formant une boucle (62) entourant l'organe de guidage et l'organe de tirage de sorte qu'il comprend un premier brin (64) s'étendant entre ladite première partie d'extrémité et ledit organe de guidage, un deuxième brin (66) s'étendant entre l'organe de guidage et l'organe de tirage et un troisième brin (68) s'étendant entre l'organe de tirage et l'élément actionnable;
un dispositif de commande (70) configuré pour amener l'organe de tirage en position de tirage lorsqu'il est actionné, par quoi l'organe de tirage exerce une traction sur le troisième brin du premier câble, de façon à amener l'élément actionnable en position actionnée,
l'organe de tirage et l'organe de guidage étant configurés pour se déplacer le long dudit premier câble lorsque le second tube est déplacé en translation par rapport au premier tube.

2. Véhicule selon la revendication 1, dans lequel ledit organe de tirage (44) et ledit organe de guidage (34) sont maintenus à une distance constante l'un de l'autre, considérée selon ladite direction longitudinale (Y), lors dudit déplacement en translation relatif du second tube (18) par rapport au premier tube (16).

3. Véhicule selon la revendication 1 ou 2, dans lequel ledit organe de tirage (44) est déplacé vers la première extrémité (18a) du second tube (18) lorsqu'il est amené en position de tirage, de sorte que la distance entre l'organe de tirage et l'organe de guidage (34) augmente.

4. Véhicule selon l'une quelconque des revendications 1 à 3, dans lequel l'organe de tirage (44) comprend une surface de contact (58) sur laquelle prend appui le premier câble (60), ladite surface de contact étant configurée pour se déplacer le long du premier câble lors du déplacement relatif du second tube (18) par rapport au premier tube (16).

5. Véhicule selon l'une quelconque des revendications 1 à 4, dans lequel l'organe de tirage (44) comprend une poulie (48) configurée pour coopérer avec ledit premier câble (60), ladite poulie pivotant à l'intérieur du second tube (18) autour d'un axe de poulie (Z) transversal à ladite direction longitudinale (Y).

6. Véhicule selon l'une quelconque des revendications 1 à 5, dans lequel l'organe de guidage (34) comprend une surface de guidage (42) sur laquelle prend appui le premier câble (60), ladite surface de guidage étant configurée pour se déplacer le long du premier câble lors du déplacement relatif du second tube (18) par rapport au premier tube (16).

7. Véhicule selon l'une quelconque des revendications 1 à 6, dans lequel l'organe de guidage (34) est fixé en une seconde extrémité (18b) du second tube (18), opposée à ladite première extrémité (18a).

8. Véhicule selon l'une quelconque des revendications 1 à 7, dans lequel ledit organe de guidage (34) comprend une partie de guidage (38) de forme hémicylindrique.

9. Véhicule selon l'une quelconque des revendications 1 à 8, dans lequel le système d'actionnement (30) comprend un dispositif de rappel configuré pour amener l'organe de tirage (44) de la position de tirage vers la position de repos, lorsque le dispositif de commande (70) n'est pas actionné.

10. Véhicule selon l'une quelconque des revendications 1 à 9, dans lequel le premier tube (16) comprend une première extrémité (16a) et une seconde extrémité (16b), la seconde extrémité étant opposée au second tube (18), la première partie d'extrémité (60a) du premier câble (60) est fixée en une zone de fixation (61) disposée au niveau de ladite première extrémité du premier tube.

11. Véhicule selon l'une quelconque des revendications 1 à 10, dans lequel le second tube (18) est monté mobile en translation à l'intérieur du premier tube (16).

12. Véhicule selon la revendication 11, comprenant un élément de serrage (50) fixé au premier tube (16) et configuré pour prendre une position de serrage dans laquelle il serre ledit premier tube sur ledit second tube (18) afin d'empêcher le déplacement en translation du second tube par rapport au premier tube et une position de libération dans laquelle il autorise le déplacement en translation du second tube à l'intérieur du premier tube.

13. Véhicule selon la revendication 12, dans lequel la première partie d'extrémité (60a) du premier câble (60) est montée audit élément de serrage (50).

14. Véhicule selon l'une quelconque des revendications 1 à 13, dans lequel le dispositif de commande (70) comprend un organe de commande (72) et un second câble (74) ayant une première partie d'extrémité (74a) reliée à l'organe de commande et une seconde partie d'extrémité (74b) reliée à l'organe de tirage (44).

15. Véhicule selon la revendication 14, dans lequel l'organe de commande (72) comprend un levier monté à la première extrémité (18a) du second tube (18).

16. Véhicule (10) selon l'une quelconque des revendications 1 à 15, comprenant un plateau (12) et une colonne de direction (14) comprenant ledit ensemble tubulaire (17), la colonne de direction étant montée pivotante par rapport au plateau, selon un axe de pliage transversal à ladite direction longitudinale, entre au moins une position pliée et une position dépliée, l'élément actionnable étant configuré pour empêcher le pivotement de la colonne de direction par rapport au plateau lorsqu'il est en position non-actionnée et pour autoriser le pivotement de la colonne de direction par rapport audit plateau autour dudit axe de pliage lorsqu'il est en position actionnée.

## Patentansprüche

1. Fahrzeug (10), beispielsweise vom Typ Tretroller, das aufweist:
eine rohrförmige Anordnung (17), die sich gemäß einer Längsrichtung (Y) erstreckt und ein erstes Rohr (16) und ein zweites Rohr (18) umfasst, das relativ zu dem ersten Rohr gemäß der Längsrichtung translatorisch beweglich angebracht ist;
mindestens ein betätigbares Element (26), das mindestens eine betätigte Position und eine unbetätigte Position einnehmen kann,
wobei das Fahrzeug ferner ein Betätigungssystem (30) umfasst, das umfasst:
ein Führungsorgan (34), das an dem zweiten Rohr befestigt ist, um sich mindestens teilweise im Inneren des zweiten Rohrs zu erstrecken;
ein Zugorgan (44), das im Inneren des zweiten Rohrs zwischen einer Ruheposition und einer Zugposition translatorisch beweglich angebracht ist, wobei das Zugorgan zwischen dem Führungsorgan und einem ersten Ende des zweiten Rohrs gegenüber dem zweiten Rohr beabstandet zu dem Führungsorgan angebracht ist, betrachtet gemäß der Längsrichtung;
mindestens ein erstes Kabel (60), das einen ersten Endabschnitt (60a) aufweist, der relativ zu dem ersten Rohr fest ist, und einen zweiten Endabschnitt (60b), der mit dem betätigbaren Element verbunden ist, wobei das erste Kabel eine Schleife (62) bildet, die das Führungsorgan und das Zugorgan umgibt, so dass es einen ersten Strang (64) umfasst, der sich zwischen dem ersten Endabschnitt und dem Führungsorgan erstreckt, einen zweiten Strang (66), der sich zwischen dem Führungsorgan und dem Zugorgan erstreckt, und einen dritten Strang (68), der sich zwischen dem Zugorgan und dem betätigbaren Element erstreckt;
eine Steuervorrichtung (70), die dafür ausgelegt ist, das Zugorgan in die Zugposition zu bringen, wenn sie betätigt wird, wodurch das Zugorgan eine Zugkraft auf den dritten Strang des ersten Kabels ausübt, um das betätigbare Element in die betätigte Position zu bringen,
wobei das Zugorgan und das Führungsorgan dafür ausgelegt sind, sich entlang des ersten Kabels zu bewegen, wenn das zweite Rohr relativ zu dem ersten Rohr translatorisch bewegt wird.

2. Fahrzeug nach Anspruch 1, wobei das Zugorgan (44) und das Führungsorgan (34) bei der relativen translatorischen Bewegung des zweiten Rohrs (18) relativ zu dem ersten Rohr (16) in einem konstanten Abstand voneinander gehalten werden, betrachtet gemäß der Längsrichtung (Y).

3. Fahrzeug nach Anspruch 1 oder 2, wobei das Zugorgan (44) zu dem ersten Ende (18a) des zweiten Rohrs (18) bewegt wird, wenn es in die Zugposition gebracht wird, so dass sich der Abstand zwischen dem Zugorgan und dem Führungsorgan (34) vergrößert.

4. Fahrzeug nach einem der Ansprüche 1 bis 3, wobei das Zugorgan (44) eine Kontaktfläche (58) umfasst, auf der sich das erste Kabel (60) abstützt, wobei die Kontaktfläche dafür ausgelegt ist, sich bei der relativen Bewegung des zweiten Rohrs (18) relativ zu dem ersten Rohr (16) entlang des ersten Kabels zu bewegen.

5. Fahrzeug nach einem der Ansprüche 1 bis 4, wobei das Zugorgan (44) eine Rolle (48) umfasst, die dafür ausgelegt ist, mit dem ersten Kabel (60) zusammenzuwirken, wobei die Rolle im Inneren des zweiten Rohrs (18) um eine Rollenachse (Z) schwenkt, die quer zu der Längsrichtung (Y) verläuft.

6. Fahrzeug nach einem der Ansprüche 1 bis 5, wobei das Führungsorgan (34) eine Führungsfläche (42) umfasst, auf der sich das erste Kabel (60) abstützt, wobei die Führungsfläche dafür ausgelegt ist, sich bei der relativen Bewegung des zweiten Rohrs (18) relativ zu dem ersten Rohr (16) entlang des ersten Kabels zu bewegen.

7. Fahrzeug nach einem der Ansprüche 1 bis 6, wobei das Führungsorgan (34) an einem zweiten Ende (18b) des zweiten Rohrs (18) befestigt ist, das dem ersten Ende (18a) gegenüberliegt.

8. Fahrzeug nach einem der Ansprüche 1 bis 7, wobei das Führungsorgan (34) einen halbzylindrisch geformten Führungsabschnitt (38) umfasst.

9. Fahrzeug nach einem der Ansprüche 1 bis 8, wobei das Betätigungssystem (30) eine Rückstellvorrichtung umfasst, die dafür ausgelegt ist, das Zugorgan (44) aus der Zugposition in die Ruheposition zu bringen, wenn die Steuervorrichtung (70) nicht betätigt ist.

10. Fahrzeug nach einem der Ansprüche 1 bis 9, wobei das erste Rohr (16) ein erstes Ende (16a) und ein zweites Ende (16b) umfasst, wobei das zweite Ende dem zweiten Rohr (18) gegenüberliegt, und der erste Endabschnitt (60a) des ersten Kabels (60) in einem Befestigungsbereich (61) befestigt ist, der im Bereich des ersten Endes des ersten Rohrs angeordnet ist.

11. Fahrzeug nach einem der Ansprüche 1 bis 10, wobei das zweite Rohr (18) im Inneren des ersten Rohrs (16) translatorisch beweglich angebracht ist.

12. Fahrzeug nach Anspruch 11, das ein Klemmelement (50) umfasst, das an dem ersten Rohr (16) befestigt und dafür ausgelegt ist, eine Klemmposition einzunehmen, in der es das erste Rohr auf dem zweiten Rohr (18) klemmt, um die translatorische Bewegung des zweiten Rohrs relativ zu dem ersten Rohr zu verhindern, und eine Freigabeposition, in der es die translatorische Bewegung des zweiten Rohrs im Inneren des ersten Rohrs zulässt.

13. Fahrzeug nach Anspruch 12, wobei der erste Endabschnitt (60a) des ersten Kabels (60) an dem Klemmelement (50) angebracht ist.

14. Fahrzeug nach einem der Ansprüche 1 bis 13, wobei die Steuervorrichtung (70) ein Steuerorgan (72) und ein zweites Kabel (74) umfasst, das einen ersten Endabschnitt (74a) aufweist, der mit dem Steuerorgan verbunden ist, und einen zweiten Endabschnitt (74b), der mit dem Zugorgan (44) verbunden ist.

15. Fahrzeug nach Anspruch 14, wobei das Steuerorgan (72) einen Hebel umfasst, der an dem ersten Ende (18a) des zweiten Rohrs (18) angebracht ist.

16. Fahrzeug (10) nach einem der Ansprüche 1 bis 15, das ein Trittbrett (12) und eine Lenksäule (14) umfasst, die die rohrförmige Anordnung (17) umfasst, wobei die Lenksäule relativ zu dem Trittbrett um eine Faltachse, die quer zu der Längsrichtung verläuft, zwischen mindestens einer gefalteten Position und einer entfalteten Position schwenkbar angebracht ist, wobei das betätigbare Element dafür ausgelegt ist, das Schwenken der Lenksäule relativ zu dem Trittbrett zu verhindern, wenn es sich in unbetätigter Position befindet, und das Schwenken der Lenksäule relativ zu dem Trittbrett um die Faltachse zuzulassen, wenn es sich in betätigter Position befindet.

## Claims

1. A vehicle (10), for example of scooter type, including:
a tubular assembly (17) extending along a longitudinal direction (Y) and comprising a first tube (16) and a second tube (18) mounted translationally movable with respect to the first tube along said longitudinal direction;
at least one actuatable element (26) which can take at least one actuated position and one non-actuated position,
the vehicle further including an actuating system (30) comprising:
a guiding member (34) attached to the second tube, in such a way as to extend at least in part inside the second tube;
a pulling member (44) mounted translationally movable inside the second tube between a rest position and a pulling position, said pulling member being disposed between said guiding member and a first end of the second tube opposite the first tube, distant from said guiding member, considered along said longitudinal direction;
at least a first cable (60) having a first end part (60a) fixed with respect to the first tube and a second end part (60b) connected to said actuatable element, the first cable forming a loop (62) surrounding the guiding member and the pulling member such that it comprises a first strand (64) extending between said first end part and said guiding member, a second strand (66) extending between the guiding member and the pulling member and a third strand (68) extending between the pulling member and the actuatable element;
a control device (70) configured to bring the pulling member into the pulling position when it is actuated, via which the pulling member exerts a traction on the third strand of the first cable, so as to bring the actuatable element into the actuated position, the pulling member and the guiding member being configured to be displaced along said first cable when the second tube is translationally displaced with respect to the first tube.

2. The vehicle as claimed in claim 1, wherein said pulling member (44) and said guiding member (34) are kept at a constant distance from one another, considered along said longitudinal direction (Y), during said relative translational displacement of the second tube (18) with respect to the first tube (16).

3. The vehicle as claimed in claim 1 or 2, wherein said pulling member (44) is displaced toward the first end (18a) of the second tube (18) when it is brought into the pulling position, such that the distance between the pulling member and the guiding member (34) increases.

4. The vehicle as claimed in any of claims 1 to 3, wherein the pulling member (44) comprises a contact surface (58) on which the first cable (60) bears, said contact surface being configured to be displaced along the first cable during the relative displacement of the second tube (18) with respect to the first tube (16).

5. The vehicle as claimed in any of claims 1 to 4, wherein the pulling member (44) comprises a pulley (48) configured to interact with said first cable (60), said pulley pivoting inside the second tube (18) about a pulley axis (Z) transverse to said longitudinal direction (Y).

6. The vehicle as claimed in any of claims 1 to 5, wherein the guiding member (34) comprises a guiding surface (42) on which the first cable (60) bears, said guiding surface being configured to be displaced along the first cable during the relative displacement of the second tube (18) with respect to the first tube (16).

7. The vehicle as claimed in any of claims 1 to 6, wherein the guiding member (34) is attached at a second end (18b) of the second tube (18), opposite said first end (18a).

8. The vehicle as claimed in any of claims 1 to 7, wherein said guiding member (34) comprises a guiding part (38) of semicylindrical shape.

9. The vehicle as claimed in any of claims 1 to 8, wherein the actuating system (30) comprises a return device configured to bring the pulling member (44) from the pulling position toward the rest position, when the control device (70) is not actuated.

10. The vehicle as claimed in any of claims 1 to 9, wherein the first tube (16) comprises a first end (16a) and a second end (16b), the second end being opposite the second tube (18), the first end part (60a) of the first cable (60) is attached at an attaching area (61) disposed at said first end of the first tube.

11. The vehicle as claimed in any of claims 1 to 10, wherein the second tube (18) is mounted translationally movable inside the first tube (16).

12. The vehicle as claimed in claim 11, comprising a clamping element (50) attached to the first tube (16) and configured to take a clamping position in which it clamps said first tube onto said second tube (18) to prevent the translational displacement of the second tube with respect to the first tube and a release position in which it permits the translational displacement of the second tube inside the first tube.

13. The vehicle as claimed in claim 12, wherein the first end part (60a) of the first cable (60) is mounted on said clamping element (50).

14. The vehicle as claimed in any of claims 1 to 13, wherein the control device (70) comprises a control member (72) and a second cable (74) having a first end part (74a) connected to the control member and a second end part (74b) connected to the pulling member (44).

15. The vehicle as claimed in claim 14, wherein the control member (72) comprises a lever mounted at the first end (18a) of the second tube (18).

16. The vehicle (10) as claimed in any of claims 1 to 15, comprising a deck (12) and a head tube (14) comprising said tubular assembly (17), the head tube being mounted pivotably with respect to the deck, along a folding axis transverse to said longitudinal direction, between at least one folded position and one unfolded position, the actuatable element being configured to prevent the pivoting of the head tube with respect to the deck when it is in the non-actuated position and to permit the pivoting of the head tube with respect to said deck about said folding axis when it is in the actuated position.
